# EUROPÄISCHE PATENTSCHRIFT

(11) **EP 0 979 715 B1**
(45) Veröffentlichungstag und Bekanntmachung des Hinweises auf die Patenterteilung: **15.01.2003**
(21) Anmeldenummer: 99114327.2
(22) Anmeldetag: 21.07.1999
(51) Int. Cl.: B29B 13/02, B29C 51/42

(54) **Heizung zum Erwärmen von thermoplastischen Kunststoffplatten und Verfahren zum Einstellen der Temperatur dieser Heizung**
Heating device for heating thermoplastic plates and method for adjusting the temperature of this heating device
Dispositif de chauffage pour chauffer des plaques en matière thermoplastique et procédé pour ajuster la température de ce dispositif de chauffage

(30) Priorität: 10.08.1998 DE 19836174
(43) Veröffentlichungstag der Anmeldung: 16.02.2000
(73) Patentinhaber: Adolf Illig Maschinenbau GmbH & Co. KG, 74081 Heilbronn (DE)
(72) Erfinder: Schwarzmann, Peter, 74081 Heilbronn (DE)

(56) Entgegenhaltungen:
- DE-A- 3 522 064
- DE-A- 19 634 941
- FR-A- 2 686 543
- PATENT ABSTRACTS OF JAPAN vol. 016, no. 484 (M-1322), 7. Oktober 1992 (1992-10-07) & JP 04 176632 A (ASANO KENKIYUUSHIYO:KK), 24. Juni 1992 (1992-06-24)
- GEISS M: "THERMOFORMING MACHINE WITH DIGITAL CONTROL OF HEATING" KUNSTSTOFFE EUROPE,DE,CARL HANSER VERLAG, MUNCHEN, Nr. 2, 1. August 1991 (1991-08-01), Seiten 188-191, XP000288891

## Beschreibung

Die Erfindung betrifft eine Heizung zum Erwärmen von thermoplastischen Kunststoffplatten gemäß dem Oberbegriff des Patentanspruchs 1, sowie ein Verfahren zum Einstellen der Temperatur dieser Heizung, gemäß dem Oberbegriff des Patentanspruchs 2.

Eine Heizung zum Erwärmen von thermoplastischen Kunststoffplatten, bestehend aus gitterartig angeordneten Heizelementen, die zu festen Heirzonen zusammengefaßt sind, ist beispielsweise aus der FR-A-2 686 543 bekannt.

Durch Vorbenutzung des Anmelders ist es bekannt, Heizungen in der Weise zu bauen, daß Ringzonen gebildet werden, denen jeweils ein Strahler mit eingebautem Thermoelement - nachfolgend Pilotstrahler genannt - zugeordnet ist. Auf diese Weise läßt sich in der Regel eine Heizbildeinstellung finden, die über die ganze Fläche eine gleichmäßige Plattenerwärmung ermöglicht. In der Praxis hat sich aber gezeigt, daß gewisse Einflüsse diese gleichmäßige Erwärmung stören. Einer dieser Einflüsse ist der Überfahreffekt, wenn die Heizung aus einer rückwärtigen Stellung über die Platte gefahren und nach dem Beheizen entgegengesetzt zurückgefahren wird. Der zuerst überfahrene Bereich wird länger beheizt als der vordere Plattenbereich, da er auch beim Zurückfahren der am längsten beheizte Bereich ist. Es gibt ferner Luftströmungen im Bereich der Maschine, die zur Folge haben, daß Platten einseitig oder an einer Ecke kälter bleiben als an den anderen Bereichen. Auf solche einseitige Temperaturunterschiede kann man mit der Ringzonen-geregelten Heizung nicht Einfluß nehmen. Eine aufwändige Strahlereinzelbeeinflussung wäre erforderlich.

Der Erfindung lag die Aufgabe zu Grunde, die Heizung so einzuteilen, daß auf einseitige oder an einer Ecke auftretende Temperaturschwankungen der Platte Einfluß genommen werden kann. Dies sollte auf einfache und kostengünstige Weise möglich sein, indem fest verdrahtete Heizzonen vorgesehen werden können, also ohne Strahleeinzelbeeinflussung, die sehr aufwändig und teuer ist. Die Möglichkeit der bekannten Ringzonen-Regelung sollte dabei ebenfalls möglich sein Ein vorteilhaftes Verfahren zum Einstellen der Temperatur der Heizung sollte dessen Aufbau besonders einfach gestalten.

Zur Lösung dieser Aufgabe werden die kennzeichnenden Merkmale des Patentanspruches 1 vorgeschlagen.

Ferner wird diese Aufgabe durch das Verfahren gemäß Patentanspruch 2 gelöst.

Durch Aufteilung der Heizung in vier symmetrische Heizfelder mit je zwei bis vier Heizzonen, wobei die Heizzonen aller Heizfelder oder nur von zwei Heizfeldern geregelt werden, ist eine optimale Anpassung bei auftretenden Temperaturunterschieden gegeben.

Ein Ausführungsbeispiel der Erfindung ist an Hand der schematischen Zeichnung näher beschrieben. Es zeigt:
- Figur 1: eine Thermoformmaschine zum Einbau einer nach dem Verfahren eingestellten Heizung.
- Figur 2 bis 4: eine Draufsicht auf eine Heizung mit dargestellten Heizfeldern und Heizzonen.

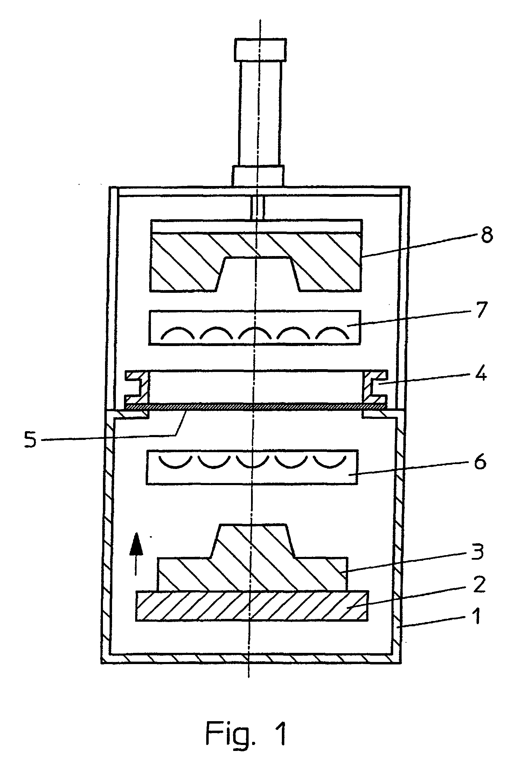

Die Thermoformmaschine, bei der Heizung und Verfahren zum Einstellen der Temperatur einer Heizung Anwendung finden, ist in Figur 1 im Querschnitt dargestellt. In einem Blaskasten 1 sitzt auf einem höhenbeweglichem Tisch 2 eine Tiefziehform 3, die an Vakuum angeschlossen werden kann. Auf dem Blaskasten 1 wird über einen höhenbeweglichen Spannrahmen 4 eine Platte 5 eingespannt und von einer Unterheizung 6 und/oder einer Oberheizung 7 erwärmt. Ein höhenverschiebbarer Streckhelfer 8 kann vorgesehen sein. Die Heizungen 6, 7 können von rückwärts taktweise über die von vom eingelegte oder von seitlich zugeführte und eingespannte Platte 5 verschoben werden. Nach dem Beheizen der Platte 5 fahren die Heizungen 6, 7 zurück. In bekannter Weise erfolgt das Tiefziehen der Platte zu einem Formteil mittels Vakuum, dessen Entformen und Entnehmen.

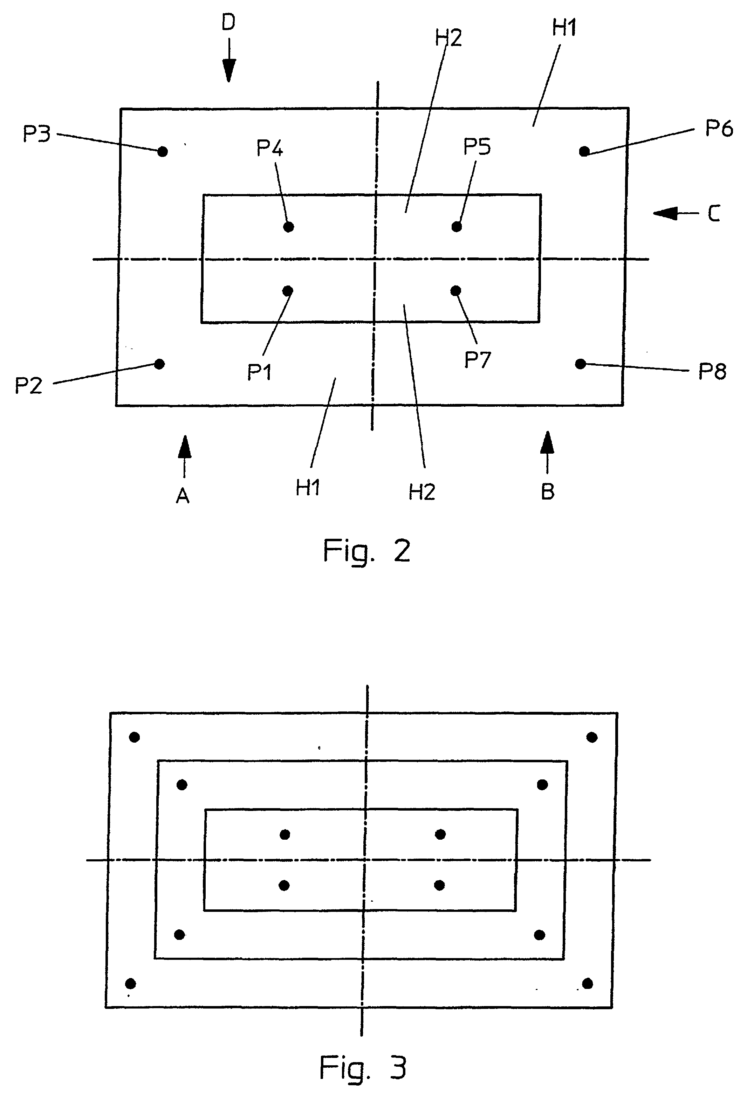

Jede Heizung 7, 8 besteht aus gitterartig angeordneten Heizelementen, vorzugsweise aus keramischen Infarotstrahlern. Mindestens eine der Heizungen 6, 7, vorzugsweise die Oberheizung 7, wird wie in Figur 2 dargestellt in vier Heizfelder A, B, C, D aufgeteilt bzw. besteht aus 4 aneinandergesetzten Heizfeldern. Jedes Heizfeld A bis D ist in mindestens zwei Heizzonen H1, H2 eingeteilt, jede dieser Heizzonen H1, H2 besitzt einen Pilotstrahler P1 bis P8 mit eingebautem Thermoelemen. Alle Strahler einer Heizzone H1, H2 sind fest mit dem zugeordneten Pilotstrahler P1 bis P8 verdrahtet und werden mit diesem zu- bzw. abgeschaltet. Auf diese Weise wird jede Heizzone H1, H2 auf einem vorgegeben Wert gehalten im Sinne einer Temperaturregelung, die von der Steuerung vorgegeben wird.

Figur 3 zeigt eine Heizung mit drei Heizzonen pro Heizfeld. Je nach Heizungsgröße sind zwei, drei oder vier Heizzonen zu empfehlen.

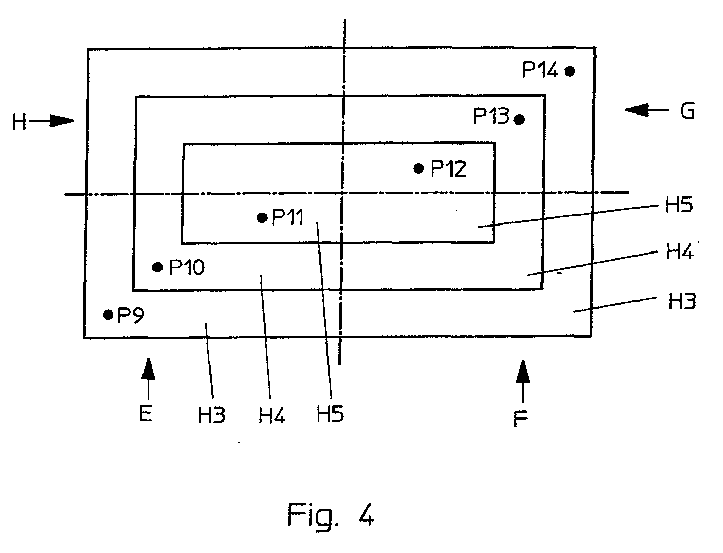

Wie man erkennt würden bei drei Heizzonen pro Heizfeld 12 Pilotstrahler benötigt. In Weiterbildung der Erfindung wird vorgeschlagen, zur Kosteneinsparung das Verfahren zum Einstellen der Temperatur der Heizung so abzuändern, wie es anhand der Figur 4 beschrieben ist. Vorausgesetzt werden drei Heizzonen H3 bis H5 je Heizfeld E, F, G, H. Jedoch nur zwei diagonalliegende Heizfelder E, G sind mit Pilotstrahlern P9 bis P14 versehen. Die Temperaturführung der Heizfelder F und H erfolgt frei wählbar in Zuordnung zu den Heizfeldern E und G. Man wählt diese je nach Erfordernis bzw. Vorteil aus. Wenn man das Heizfeld F dem Heizfeld E zuordnet, das Heizfeld H dem Heizfeld G kann man die Heizung auf einer Hälfte kälter fahren als auf der anderen Hälfte, um dem Überfahreffekt entgegenzuwirken.

Ordnet man das Heizfeld H dem Heizfeld E zu und das Heizfeld F dem Heizfeld G kann man die linke und rechte Seite der Heizung auf unterschiedliche Temperatur einstellen, um einer seitlichen Temperaturschwankung in der Platte entgegenzuwirken.

Ordnet man beide Heizfelder F und H dem Heizfeld E zu kann man die Temperatur des Heizfeldes G anders einstellen als die der Heizfelder E, F, H und damit die rechte hintere Ecke einer Platte (unter dem Heizfeld G) beeinflussen im Verhältnis zu der restlichen Platte. Gleiches erfolgt mit der möglichen unterschiedlichen Beeinflussung der linken vorderen Ecke der Platte (unter Heizfeld E), wenn man die Heizfelder F und H beide dem Heizfeld G zuordnet.

Ordnet man schließlich drei Heizfelder dem vierten Heizfeld zu, also z.B. die Heizfelder F, G, H dem Heizfeld E, wird über die Pilotstrahler P9 - P11 die Ringzonen - geregelte Heizung ermöglicht, die also ebenfalls realisiert werden kann.

## Patentansprüche

1. Heizung zum Erwärmen von thermoplastischen Kunststoffplatten, bestehend aus gitterartig angeordneten Heizelementen, die zu festen Heizzonen zusammengefaßt sind, wobei die einzelnen Heizzonen Pilotstrahler zur Temperaturregelung aufweisen, **gekennzeichnet durch** folgende Merkmale:
a) Die Heizung besteht aus vier Heizfeldern (A, B, C, D bzw. E, F, G, H).
b) Jedes dieser Heizfelder (A, B, C, D bzw. E, F, G, H) besteht aus mehreren Heizzonen (H1, H2 bzw. H3, H4, H5), deren Strahler verdrahtungsmäßig zusammengefaßt sind.
c) Mindestens in zwei Heizfeldern ist jede Heizzone (H1, H2 bzw. H3, H4, H5) mit einem Pilotstrahler (P1 bis P14) versehen.

2. Verfahren zum Einstellen der Temperatur einer Heizung gemäß Anspruch 1, bestehend aus vier Heizfeldern (A, B, C, D bzw. E, F, G, H), wobei in zwei Heizfeldem (E, G) die Heizzonen (H1, H2, H3) mit Pilotstrahlern (P9 bis P14) versehen sind, **dadurch gekennzeichnet, daß** die beiden Heizfelder (F, H) ohne Pilotstrahler einem Heizfeld (E bzw. G) oder beiden Heizfeldem (E, G) mit Pilotstrahler (P9 bis P14) zugeordnet werden.

## Claims

1. Heater for heating thermoplastic synthetic material plates, consisting of heating elements which are arranged in grid form and which are combined into fixed heating zones, wherein the individual heating zones have pilot radiators for temperature regulation, **characterised by** the following features:
a) the heater consists of four heating fields (A, B, C, D or E, F, G, H),
b) each heating field (A, B, C, D or E, F, G, H) consists of several heating zones (H1, H2 or H3, H4, H5), the radiators of which are combined in terms of wiring and
c) in at least two heating fields each heating zone (H1, H2 or H3, H4, H5) is provided with a pilot radiator (P1 to P14).

2. Method for setting the temperature of a heater according to claim 1, consisting of four heating fields (A, B, C, D or E, F, G, H), wherein in two heating fields (E, G) the heating zones (H1, H2, H3) are provided with pilot radiators (P9 to P14), **characterised in that** the two heating fields (F, H) without pilot radiators are associated with one heating field (E or G), or with both heating fields (E, G), with a pilot radiator (P9 to P14).

## Revendications

1. Installation de chauffage pour chauffer des plaques de matière thermoplastique, comprenant des éléments chauffants répartis en forme de grilles, regroupés en zones de chauffage fixes, les différentes zones de chauffage comportant un radiateur pilote, pour la régulation de température,
**caractérisée en ce que**
a) l'installation de chauffage se compose de quatre champs (A, B, C, D ; E, F, G, H),
b) chacun des champs de chauffage (A, B, C, D ; E, F, G, H) se compose de plusieurs zones de chauffage (H1, H2 ; H3, H4, H5) dont les éléments rayonnants sont regroupés par câblage,
c) au moins dans deux champs de chauffage, chaque zone chauffante (H1, H2 ; H3, H4, H5) comporte un radiateur pilote (P1 ... P14).

2. Procédé de réglage de la température d'une installation de chauffage selon la revendication 1, composée de quatre champs chauffants (A, B, C, D ; E, F, G, H) dont deux champs chauffants (E, G), comportent des radiateurs pilotes (P9-P14) dans les zones de chauffage (H1, H2, H3)
**caractérisé en ce que**
les deux champs chauffants (F, H) sans radiateur pilote sont associés à un champ chauffant (E ou G) ou aux deux champs chauffants (E, G) ayant un radiateur pilote (P9-P14).
